# EUROPÄISCHE PATENTSCHRIFT

(11) **EP 0 506 697 B1**
(45) Veröffentlichungstag und Bekanntmachung des Hinweises auf die Patenterteilung: **08.02.1995**
(21) Anmeldenummer: 91900224.6
(22) Anmeldetag: 13.12.1990
(51) Int. Cl.: C09J 175/04, C08G 18/44

(54) **HAUSHALTSALLESKLEBER AUF POLYURETHANBASIS**
POLYURETHANE-BASED DOMESTIC UNIVERSAL ADHESIVE
COLLE UNIVERSELLE DOMESTIQUE A BASE DE POLYURETHANE

(30) Priorität: 22.12.1989 DE 3942681
(43) Veröffentlichungstag der Anmeldung: 07.10.1992
(73) Patentinhaber: Henkel Kommanditgesellschaft auf Aktien, 40191 Düsseldorf (DE)
(72) Erfinder: HÖFER, Rainer Dr., W-4000 Düsseldorf 30 (DE); GIERENZ, Gerhard Dr., W-5650 Solingen 19 (DE); KLAUCK, Wolfgang Dr., W-4005 Meerbusch 2 (DE); GRÜTZMACHER, Roland, W-5603 Wülfrath (DE)
(86) Internationale Anmeldenummer: EP9002169
(87) Internationale Veröffentlichungsnummer: WO9109919

(56) Entgegenhaltungen:
- EP-A- 0 000 548
- EP-A- 0 003 521
- EP-A- 0 382 052
- WO-A-90/01508
- DE-A- 3 630 045

## Beschreibung

Die Erfindung betrifft den Einsatz spezieller, im wesentlichen klarer, wäßriger und zumindest weitgehend lösemittelfreier Polyurethan-Dispersionen als Haushaltsalleskleber.

Haushaltsalleskleber - auch Vielzweckkleber genannt - haben den Zweck, eine Vielzahl im Haushalt vorkommender Substrate (Papier, Pappe, Fotos, Textilien, Leder, Filz, Bast, Kork, Folien, Metalle, wie Aluminium und Eisen, Porzellan, Keramik, Glas, Holz, verschiedene Kunststoffe, wie auch z.B. Polystyrolschäume) zu verkleben. Dabei wird erwartet, daß auf dieser Vielzahl von Substraten, die sich in ihrer Oberflächenstruktur chemisch und physikalisch unterscheiden, und die üblicherweise vor dem Verkleben keiner speziellen Oberflächenbehandlung unterzogen werden, ausreichende Haftwirkung einstellt.

Im Vergleich zu der großen Vielzahl von Klebstoffklassen und -arten, die in Industrie und Handwerk eingesetzt werden, gibt es nur wenige Stoffe, die den hohen Anforderungen an die Universalität eines Haushaltsallesklebers gewachsen sind. Breite Verwendung hat dabei lediglich Polyvinylacetat und seine Copolymeren gefunden, das üblicherweise in Lösung oder für die Holzverklebung als Dispersion angeboten wird.

Die Forderung nach Universalität stellt für einen Klebstoff ein besonders hartes Auswahlkriterium dar. Sie bedeutet letztendlich, daß die Klebstoffmoleküle zu polaren wie unpolaren Grenzflächen hohe Affinität aufweisen müssen. Die Aussage, daß eine bestimmte Substanz als Klebstoff geeignet ist, gibt daher für den Fachmann noch keinen Hinweis, ob sie auch als Haushaltsalleskleber eingesetzt werden kann.

Neben der Forderung der Universalität besteht bei Haushaltsallesklebern neuerdings auch der Wunsch, geruchsneutrale, lösemittelfreie, physiologisch unbedenkliche, klare, wäßrige Formulierungen zu erreichen. Diese Formulierungen sollen jedoch gleichzeitig zu Klebstoffen führen, deren getrocknete Filme wiederum über eine gewisse Wasserfestigkeit verfügen. Darüber hinaus sollen diese wasserbasierten Klebstoffe auch in der Lage sein, schwierig klebbare Substrate, wie Kunststoffe, zu binden. Außerdem sollen sie eine hohe Lagerstabilität aufweisen.

Dieses Anforderungsprofil konnte weder auf Basis der bisher für Alleskleber bevorzugten Bindemittel Polyvinylacetat und Vinylacetat-Copolymere noch durch Alternativen, wie Nitrocellulose in allen Punkten erfüllt werden. Zwar kann Polyvinylacetat lösemittelfrei in Form wäßriger Dispersionen hergestellt werden, diese Dispersionen sind jedoch nicht transparent, sondern milchig-weiß. Sie zeigen z. B. gute Gebrauchseigenschaften bei Verwendung als Holzleim. Auch die als Dispersionskleber weit verbreiteten Acrylate und Styrol-Acrylate sind in Form transparenter Haushaltsklebstoffe mit den genannten Eigenschaften im Markt nicht bekannt.

Es wurde nun überraschenderweise gefunden, daß speziell ausgewählte Ausführungsformen der seit Jahrzehnten bekannten wäßrigen Polyurethan-Dispersionen sich als Vielzweckalleskleber eignen. Polyurethan-Dispersionen bestehen aus Addukten mehrfunktioneller Isocyanate an mehrfunktionelle OH-Verbindungen, die einkondensiert Bausteine enthalten, die in wäßriger Lösung zur Salzbildung befähigt sind.

In der deutschen Offenlegungsschrift 36 30 045 wird in breiter Weise ein Klebstoff auf Basis einer wäßrigen Dispersion von Polyurethanen mit eingebauten Carboxylat- und/oder Sulfonatgruppen beschrieben, dessen zugrundeliegende Diisocyanatkomponente aus einem Gemisch mindestens zweier (cyclo)aliphatischer Diisocyanate besteht. Die Offenlegungsschrift nennt zahlreiche Polyole, zahlreiche Isocyanatverbindungen und zahlreiche salzbildende Komponenten als Modifizierungsmittel. Weiter genannt sind auch die hier üblichen Kettenverlängerungsmittel Die Klebstoffe sollen zum Verkleben beliebiger Substrate geeignet sein.

Die hinsichtlich der Polyolkomponente breite Offenbarung der DE 36 30 045 umfaßt sowohl Polyurethan-Dispersionen, bei denen als OH-funktionelle Komponente Polyester eingesetzt werden, als auch solche, bei denen Polyether verwendet werden. Polyurethan-Dispersionen auf Basis von Polyurethanen, die aus OH-funktionellen Polyestern aufgebaut sind, sind jedoch als Haushaltsalleskleber wenig geeignet, da sie bei Lagerung der Hydrolyse unterliegen und somit nicht die geforderte Lagerstabilität aufweisen. Polyurethan-Dispersionen, denen als OH-funktionelle Komponente Polyethylenoxid und/oder Polypropylenoxid zugrundeliegen, sind ebenfalls als Vielzweckkleber nicht geeignet, da sie schlechte Haftung auf Kunststoffoberflächen zeigen und somit das Erfordernis der Universalität nicht erfüllen.

Die DE 36 30 045 benennt zwar als mögliche Polyhydroxylverbindung beispielsweise auch Polyhydroxypolycarbonate, es findet sich jedoch kein Hinweis darauf, daß derartige Polycarbonate eine geeignete Basis für Polyurethan-Dispersionen für Haushaltsalleskleber mit dem genannten Anforderungsprofil darstellen.

Auch in der EP-A-3521 sind wäßrige Polyurethandispersionen sowie deren Verwendung als klebemittel beschrieben. Die in dieser Schrift offenbarten Polyurethandispersionen sind auf der Basis von Polyester-polyolen, mehrfunktionellen Isocyanaten und salzbildenden komponenten hergestellt. Wie in der DE 36 30 045 sind jedoch auch in diesem Dokument hydroxylgruppenhaltige Polycarbonate als Diolkomponente für die Umsetzung mit Polyisocyanaten vorgeschlagen. Jedoch fehlen auch in dieser Entgegenhaltung Hinweise, daß derartige Polycarbonate eine geeignete Basis für Polyurethan-Dispersionen für Haushaltsalleskleber mit dem genannten Anforderungsprofil darstellen.

Aus der nicht vorveröffentlichten Anmeldung mit dem Aktenzeichen P 38 27378.0 sind zwar Haushaltsalleskleber mit dem genannten Anforderunsprofil auf Basis von Polyurethan-Dispersionen bereits bekannt, jedoch nicht solche Dispersionen, bei denen die Polyurethane durch Umsetzung von Polycarbonatdiolen mit Isocyanaten gebildet werden.

Aufgabe der Erfindung ist es daher, aufzuzeigen, daß spezielle wäßrige, transparente Polyurethan-Dispersionen den komplexen und teilweise widersprüchlichen vorher geschilderten Anforderungen an Haushaltsalleskleber genügen. Dazu gehört auch eine sehr gute Hydrolysestabilität und eine hohe Klebkraft.

Gegenstand der Erfindung ist die Verwendung einer im wesentlichen klaren und zumindest weitgehend lösemittelfreien wäßrigen einkomponentigen Polyurethan-Dispersion auf Basis der Reaktionsprodukte
- einer Polyolmischung, die ganz oder teilweise aus Polycarbonatdiolen besteht,
- einer im Mittel zwei- oder mehrfunktionellen Isocyanatkomponente, die vorzugsweise Dimerfettsäureisocyanate enhält,
- einer in wäßriger Lösung zur Salzbildung befähigten funktionellen Komponente und
- gewünschtenfalls eines Kettenverlängerungsmittels

als Haushaltsalleskleber.

Die den erfindungsgemäß eingesetzten Polyurethan-Dispersionen zugrundeliegenden Polyurethane basieren auf einer ganz oder teilweise aus Polycarbonatdiolen bestehenden Polyolmischung, wobei der Gehalt an Polycarbonatdiolen, bezogen auf Polyolmischungen, nicht kleiner als 30 und vorzugsweise nicht kleiner als 70 Gew.-% sein soll.

Unter Polycarbonatdiolen werden hier Polyester verstanden, die theoretisch durch Veresterung der Kohlensäure mit zwei- oder mehrwertigen Alkoholen dargestellt werden können, und an beiden Kettenenden jeweils eine Hydroxylgruppe aufweisen. Vorzugsweise besitzen die Alkohole und letztlich damit auch die Polycarbonatdiole einen aliphatischen Aufbau. Geeignete mehrwertige Alkohole können z.B. dreiwertig sein wie etwa das Glycerin. Bevorzugt werden jedoch zweiwertige Alkohole, insbesondere wenn diese nicht weniger als vier und nicht mehr als zehn C-Atome aufweisen. Cyclische und verzweigtkettige Alkohole sind zwar geeignet, jedoch werden lineare bevorzugt. Die Hydroxylgruppen können benachbart, z.B. in 1,2-Stellung, oder auch isoliert angeordnet sein. Bevorzugt werden Diole mit terminalen OH-Gruppen. Geeignete Polycarbonatdiole haben ein Molekulargewicht von 500 bis 8000, insbesondere von 800 bis 2500.

Die den erfindungsgemäß eingesetzten Polyurethan-Dispersionen zugrundeliegenden Polycarbonatdiole können weiterhin bis zu 70 Gew.-% durch andere, in derartigen Zubereitungen übliche Polyole ersetzt sein. Ganz allgemein gilt hier, daß diese anderen Polyole über zumindest zwei reaktionsfähige Wasserstoffatome verfügen müssen und im wesentlichen linear sind, wobei das Molekulargewicht zwischen 300 und 20.000, vorzugsweise zwischen 400 und 6.000 liegen kann. Bevorzugt sind hier Polyester, Polyacetale, Polyether, Polythioether, Polyamide und/oder Polyesteramide, die jeweils im Mittel 2 bis 4 Hydroxylgruppen aufweisen.

Als Polyether seien z.B. die Polymerisationsprodukte des Ethylenoxids, Propylenoxids, Butylenoxids sowie ihre Misch- oder Pfropfpolymerisationsprodukte sowie die durch Kondensation von mehrwertigen Alkoholen oder Mischungen derselben und die durch Alkoxylierung von mehrwertigen Alkoholen, Aminen, Polyaminen und Aminoalkoholen gewonnenen Polyether genannt. Auch isotaktisches Polypropylenglykol kann Verwendung finden.

Als Polyacetale kommen z. B. die aus Glykolen wie Diethylenglykol, Triethylenglykol, Hexandiol und Formaldehyd herstellbaren Verbindungen in Frage. Auch durch Polymerisation cyclischer Acetale lassen sich geeignete Polyacetale herstellen.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythioether, Polythiomischether, Polythioetherester, Polythioetheresteramide. Derartige Polyhydroxylverbindungen können auch in alkylierter Form bzw. in Mischung mit Alkylierungsmitteln angewandt werden.

Zu den Polyestern, Polyesteramiden und Polyamiden zählen die aus mehrwertigen gesättigten und ungesättigten Carbonsäuren bzw. deren Anhydriden und mehrwertigen gesättigten und ungesättigten Alkoholen, Aminoalkoholen, Diaminen, Polyaminen und ihren Mischungen gewonnenen, überwiegend linearen Kondensate, z.B. Polyterephthalate. Auch Polyester aus Lactonen, z. B. Caprolacton oder aus Hydroxycarbonsäuren sind verwendbar. Die Polyester können Hydroxyl- oder Carboxylendgruppen aufweisen. Zu ihrem Aufbau können als Alkoholkomponente auch höhermolekulare Polymerisate oder Kondensate, wie z.B. Polyether, Polyacetale, Polyoxymethylene (mit)verwendet werden.

Auch bereits Urethan- oder Harnstoffgruppen enthaltende Polyhydroxylverbindungen sowie gegebenenfalls modifizierte natürliche Polyole wie Rizinusöl sind verwendbar. Grundsätzlich kommen auch Polyhydroxylverbindungen, welche basische Stickstoffatome aufweisen, in Frage, z. B. polyalkoxylierte primäre Amine oder Polyester bzw. Polythioether, welche Alkyl-diethanolamin einkondensiert enthalten. Weiterhin eingesetzt werden können Polyole, die durch vollständige oder teilweise Ringöffnung epoxidierter Triglyceride mit primären oder sekundären Hydroxylverbindungen erzeugt werden können, beispielsweise das Umsetzungsprodukt von epoxidiertem Sojaöl mit Methanol.

Als Polyisocyanate in den erfindungsgemäßen Polyurethan-Dispersionen sind alle aromatischen und aliphatischen Diisocyanate geeignet, wie z. B. 1,5-Naphthylendiisocyanat, 4.4'-Diphenylmethandiisocyanat, 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats, gegebenenfalls in Mischung, 1-Methyl-2,4-diisocyanato-cyclohexan, 1,6-Diisocyanato-2,2,4-trimethyl-hexan, 1,6-Diisocyanato-2,4,4-trimethylhexan, 1-Isocyanatomethyl-3-isocyanato-1,5,5-trimethyl-cyclohexan, chlorierte und bromierte Diisocyanate, phosphorhaltige Diisocyanate, 4,4'-Diisocyanatophenylperfluorethan, Tetramethoxy-butan-1,4-diisocyanat, Butan-1,4-diisocyanat, Hexan-1,6-diisocyanat, Dicyclohexylmethandiisocyanat, Cyclohexan-1,4-diisocyanat, Ethylen-diisocyanat, Phthalsäure-bis-isocyanatoethylester, ferner Polyisocyanate mit reaktionsfähigen Halogenatomen, wie 1-Chlormehtylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, meta- und/oder para-Tetramethylxyloldiisocyanat, 1,4-Diisocyanatobutan, 1,2-Diisocyanatododecan und Dimerfettsäure-diisocyanat. Die vorgenannten Isocyanate können allein oder auch in Mischung eingesetzt werden. Bevorzugt sind cyclische oder verzweigte aliphatische Diisocyanate, insbesondere Isophorondiisocyanat.

Interesse verdienen teilweise verkappte Polyisocyanate, welche die Bildung selbstvernetzender Polyurethane ermöglichen, z.B. dimeres Toluylendiisocyanat, oder mit beispielsweise Phenole, tertiärem Butanol, Phthalimid, Caprolactam partiell umgesetzte Polyisocyanate.

Bei einer bevorzugten Ausführungsform enthält die Isocyanatkomponente zumindest anteilsweise Dimerfettsäureisocyanat. Als Dimerfettsäure bezeichnet man ein Gemisch von überwiegend C₃₆-Dicarbonsäuren, das durch thermische oder katalytische Dimerisierung ungesättigter C₁₈-Monocarbonsäuren, wie Ölsäure, Tallölfettsäure oder Linolsäure, hergestellt wird. Derartige Dimerfettsäuren sind dem Fachmann seit langem bekannt und kommerziell erhältlich. Die Dimerfettsäure läßt sich zu Dimerfettsäureisocyanaten umsetzen. Im Sinne der Erfindung wird Dimerfettsäurediiscyanat bevorzugt. Technisches Dimerfettsäurediisocyanat besitzt im Mittel mindestens zwei und weniger als drei Isocyanatgruppen pro Molekül Dimerfettsäure.

Zu den Kettenverlängerungsmitteln mit reaktionsfähigen Wasserstoffatomen zählen:
- die üblichen gesättigten und ungesättigten Glykole, wie Ethylenglykol oder Kondensate des Ethylenglykols, Butandiol-1 ,3, Butandiol-1,4, Butendiol, Propandiol-1 ,2, Propandiol-1,3, Neopentylglykol, Hexandiol, Bis-hydroxymethyl-cyclohexan, Dioxyethoxyhydrochinon, Terephthalsäure-bis-glykolester, Bernsteinsäure-di-2- hydroxyethyl-amid, Bernsteinsäure-di- N-methyl-(2-hydroxyethyl) -amid, 1,4-Di( 2-hydroxy-methyl-mercapto)-2,3,5,6-tetrachlorbenzol, 2-Methylenpropandiol-(1,3), 2-Methyl-propandiol-(1,3);
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin; Auszuschließen sind Diamine mit nicht gewünschten Stoffeigenschaften, die die Gesundheit beeinträchtigen könnten, so beispielsweise Hydrazin, Diaminodiphenylmethan oder die Isomeren des Phenylendiamins. Weiterhin auch Carbohydrazide oder Hydrazide von Dicarbonsäuren.
- Aminoalkohole wie Ethanolamin, Propanolamin, Butanolamin, N-Methyl-ethanolamin, N-Methyl-isopropanolamin;
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren;
- Wasser

Es ist hervorzuheben, daß im Rahmen vorliegender Erfindung nicht streng zwischen den Verbindungen mit reaktionsfähigen Wasserstoffatomen mit einem Molekulargewicht von 300 bis 20 000 und den sogenannten "Kettenverlängerungsmitteln" unterschieden werden kann, da die Übergänge zwischen den beiden Verbindungsklassen fließend sind. Verbindungen, die nicht aus mehreren Monomereinheiten aufgebaut sind, jedoch ein Molekulargewicht über 300 aufweisen, wie z.B. 3,3'-Dibrom-4,4'-diaminodiphenylmethan, werden zu den Kettenverlängerungsmitteln gerechnet, ebenso jedoch Pentaethylenglykol, obwohl letzteres seiner Zusammensetzung nach eigentlich ein Polyetherdiol ist.

Spezielle Kettenverlängerungsmittel mit mindestens einem basischen Stickstoffatom sind z.B. mono-, bis- oder polyoxalkylierte aliphatische, cycloaliphatische, aromatische oder heterocyclische primäre Amine, wie N-Methyldiethanolamin, N-Ethyl-diethanolamin, N-Propyl-diethanolamin, N-Isopropyl-diethanolamin, N-Butyl-diethanolamin, N-Isobutyl-diethanolamin, N-Oleyl-diethanolamin, N-Stearyl-diethanolamin, oxethyliertes Kokosfettamin, N-Allyl-diethanolamin, N-Methyl-diisopropanolamin, N-Ethyl-diisopropanolamin, N-Propyl-diisopropanolamin, N-Butyl-diisopropanolamin, C-Cyclohexyl-diisopropanolamin, N,N-Dioxethylanilin, N,N-Dioxethyltoluidin, N,N-Dioxethyl-1-aminopyridin, N,N'-Dioxethyl-piperazin, Dimethyl-bis-oxethylhydrazin, N,N'-Bis-(2-hydroxyethyl)-N,N'-diethyl-hexahydro-p-phenylendiamin, N-12-Hydroxyethyl-piperazin, polyalkoxylierte Amine wie oxypropyliertes Methyl-diethanolamin, ferner Verbindungen wie N-Methyl-N,N-bis-3-aminopropylamin, N-( 3-Aminopropyl)-N,N'-dimethylethylendiamin, N-(3-Aminopropyl)-N-methyl-ethanolamin, N,N'-Bis-(3-aminopropyl)-N,N'-dimethylethylendiamin, N,N'-Bis(3-aminopropyl)-piperazin, N-(2-Aminoethyl)-piperazin, N,N'-Bisoxyethyl-propylendiamin, 2,6-Diaminopyridin, Diethanolamino-acetamid, Diethanolamidopropionamid, N,N-Bis-oxyethyl-phenyl-thiosemicarbazid, N,N-Bis-oxethyl-methyl-semicarbazid, p, p'-Bis-aminomethyl-dibenzylmethylamin, 2,6-Diaminopyridin, 2-Dimethylaminomethyl-2-methyl-propandiol-1,3.

Kettenverlängerungsmittel mit zur Quaternierung befähigten Halogenatomen bzw. R-SO₂O-Gruppen sind beispielsweise Glycerin-1-chlorhydrin, Glycerinmonotosylat, Pentaerythrit-bis-benzolsulfonat, Glycerin-monomethansulfonat, Addukte aus Diethanolamin und chlormethylierten aromatischen Isocyanaten oder aliphatischen Halogenisocyanaten wie N,N-Bis-hydroxyethyl-N'-m-chlormethylphenylharnstoff, N-Hydroxyethyl-N'-chlorhexylharnstoff, Glycerin-mono-chlorethyl-urethan, Bromacetyl-dipropylentriamin, Chloressigsäurediethanolamid.

Die den erfindungsgemäß eingesetzten Polyurethan-Dispersionen zugrundeliegenden Polyurethane haben weiterhin als wichtigen Bestandteil eine in wäßriger Lösung zur Salzbildung befähigte funktionelle Komponente. Als solche können eingesetzt werden Dihydroxy- oder auch Diamino-Verbindungen, die eine ionisierbare Carbonsäure-, Sulfonsäure- oder Ammoniumgruppe enthalten. Diese Verbindungen können entweder als solche eingesetzt werden oder sie können in-situ hergestellt werden. Um ionisierbare Carbonsäuregruppen tragende Verbindungen in das Polyurethan einzubringen, kann der Fachmann den Polyolen Dihydroxycarbonsäuren zugeben. Eine bevorzugte Dihydroxycarbonsäure ist beispielsweise die Dimethylolpropionsäure.

Um zur Salzbildung befähigte Sulfonsäuregruppen einzuführen, kann den Polyolen eine Diaminosulfonsäure zugesetzt werden. Beispiele sind 2,4-Diaminobenzolsulfonsäure aber auch die N-(w-Amino-alkan)-w'-aminoalkansulfonsäuren wie sie in der DE 20 35 732 beschrieben sind.

Um zur Salzbildung befähigte Ammoniumgruppen in das Polymere einzufügen, kann auch gemäß der bereits zitierten DE 15 95 602 das Polyurethan-Prepolymere mit Hilfe eines aliphatischen und aromatischen Diamins so modifiziert werden, daß an den Kettenenden primäre Aminogruppen vorliegen, die dann mit üblichen Alkylierungsmitteln in quartäre Ammoniumverbindungen oder in Aminsalze überführt werden können.

Erfindungsgemäß ist es bevorzugt, die zu verwendenden Polyurethan-Prepolymeren mit Hilfe von Carbonsäure- oder Sulfonsäuregruppen wasserlöslich zu machen, da Polyurethan-Dispersionen, die derartige anionische Modifizierungsmittel enthalten, unter alkalischen Bedingungen wieder abgelöst werden können, d.h. derartige Klebstoffe sind unter Waschbedingungen aus bestimmten Substraten, z.B. aus Textilien wieder entfernbar.

In den erfindungsgemäß eingesetzten Polyurethan-Dispersionen liegen die Polymeren in Salzform vor. Bei den bevorzugten mit Carbonsäuren oder Sulfonsäuren modifizierten Polymeren liegen als Gegenionen Alkalimetallsalze, Ammoniak oder Amine, d.h. primäre, sekundäre oder tertiäre Amine vor. Bei den kationisch modifizierten Produkten liegen als Gegenionen Säureanionen, z. B. Chlorid, Sulfat oder die Anionen organischer Carbonsäuren vor. Die zur Salzbildung befähigten Gruppen können daher durch die Gegenionen teil- oder vollständig neutralisiert werden. Auch ein Überschuß an Neutralisationsmittel ist möglich.

Wie schon bei der Diskussion der erfindungsgemäß verwendbaren Kettenverlängerungsmittel ausgeführt, sind Verbindungen mit gesundheitsschädlichen oder -beeinträchtigenden Eigenschaften nicht erwünscht. Dies gilt um so mehr, als es sich bei der vorliegenden Erfindung um einen universell einsetzbaren Alleskleber handelt, der vermutlich auch von gesundheitlich stärker gefährdeten Personenkreisen, wie Kindern, Alten, Kranken, Schwangeren etc. verwendet werden wird. Deshalb ist bei einer besonders bevorzugten Ausführungsform nicht nur bei den Kettenverlängerungsmitteln auf physiologisch bedenkliche Stoffe wie Hydrazin zu verzichten, sondern auch bei den übrigen Komponenten des Klebstoffs auf eine möglichst weitgehende physiologische Unbedenklichkeit zu achten. Dazu zählt z.B. der teilweise, nach Möglichkeit vollständige Verzicht auf organische Lösungsmittel. Die im Zusammenhang mit Polyurethanklebstoffen oftmals diskutierte Gesundheitsgefährdung durch freie Isocyanate bzw. nicht abreagierte NCO-Gruppen der Polymeren oder Prepolymeren ist bei der vorliegenden Erfindung gegenstandslos, da hier die Polyurethane in Wasser dispergiert sind und Isocyanatgruppen, wie dem Fachmann bekannt ist, sofort mit Wasser abreagieren, so daß als sichergestellt gelten kann, daß die vorliegenden erfindungsgemäßen Polyurethandispersionen keine reaktiven NCO-Gruppen aufweisen.

Zur Herstellung der für die erfindungsgemäßen Zwecke insbesondere geeigneten Polyurethane werden die Polyole und ein Überschuß an Diisocyanat unter Bildung eines Polymers mit endständigen Isocyanatgruppen umgesetzt, wobei geeignete Reaktionsbedingungen und Reaktionszeiten sowie Temperaturen je nach dem betreffenden Isocyanat variiert werden können. Der Fachmann weiß, daß die Reaktionsfähigkeit der umzusetzenden Bestandteile ein entsprechendes Gleichgewicht zwischen Reaktionsgeschwindigkeit und unerwünschten Nebenreaktionen, die zu einer Verfärbung und Molekulargewichtsverringerung führen, notwendig macht. Typischerweise wird die Reaktion unter Rühren bei ungefähr 50 bis ungefähr 120°C innerhalb von ungefähr 1 bis 6 Stunden durchgeführt.

Bevorzugtes Herstellverfahren ist das sogenannte Acetonverfahren (D. Dieterich, Angew. Makromol. Chem. 98, 133 (1981)). Weiterhin können die erfindungsgemäß eingesetzten Polyurethan-Dispersionen auch nach dem Verfahren der DE 15 95 602 hergestellt werden. Ein neueres Verfahren zur Herstellung von Polyurethan-Dispersionen ist in der DE 36 03 996 sowie in dem dort angegebenen Stand der Technik, nämlich: DE-PS 8 80 485, DE-AS 10 44 404, US-PS 30 36 998, DE-PS 11 78 586, DE-PS 11 84 946, DE-AS 12 37 306, DE-AS 14 95 745, DE-OS 15 95 602, DE-OS 17 70 068, DE-OS 20 19 324, DE-OS 20 35 732, DE-OS 24 46 440, DE-OS 23 45 256, DE-OS 24 27 274, US-PS 34 79 310 und Angewandte Chemie 82,53 (1970) und Angew. Makromol. Chem. 26,85 ff. (1972) beschrieben.

Von den genannten Verfahren ist insbesondere das "Acetonverfahren" in Analogie zur Lehre der DE-OS 14 95 745 (= US-PS 34 79 310) bzw. zu der DE-OS 14 95 847 (GB-PS 10 67 788) von Bedeutung. Hierbei wird im allgemeinen zunächst ein Prepolymer mit -NCO Endgruppen hergestellt, welches anschließend in einem inerten Lösungsmittel gelöst wird, worauf sich die gegebenenfalls Kettenverlängerung in Lösung zum höhermolekularen Polyurethan anschließt. Die Umsetzung der Polyolkomponente mit der Isocanatkomponente kann auch in dem inerten Lösungsmittel, z.B. Aceton, erfolgen, wobei meistens so vorgegangen wird, daß die Polyolkomponente und die zur Salzbildung befähigte Komponente im Lösemittel aufgenommen werden und dann die Zugabe der Isocyanatkomponente bis zur Stabilität des NCO-Gehalts erfolgt. Enthält die Isocyanatkomponente Dimerfettsäurediisocyanat, so wird dieses in einer besonderen Ausführungsform zuerst umgesetzt. Der Einbau der für die Dispergierung erforderlichen hydrophilen Gruppen erfolgt vorzugsweise entweder durch Einbau von ionische und/oder potentiell ionische und nicht-ionische hydrophile Gruppen tragenden Diolen ins Prepolymer oder durch Verwendung entsprechender Amine als Kettenverlängerungsmittel. Nach beendeter Umsetzung wird neutralisiert. Die Dispergierung erfolgt unter Zugabe von Wasser diskontinuierlich in Rührkesseln mit Rührer und evtl. Strombrechern. Das verwendete Lösemittel wird in der Regel unmittelbar nach der Dispergierung in Wasser aus dem Rührkessel abdestilliert.

Weitere Verfahren zur Herstellung von Polyurethan-Prepolymeren, insbesondere zur kontinuierlichen Herstellung von Polyurethan-Prepolymeren, sind in den deutschen Offenlegungsschriften 22 60 870, 23 11 635 und 23 44 135 beschrieben.

Um im wesentlichen klare, d. h. opake bis wasserklare Polyurethan-Dispersionen zu erhalten, muß der Fachmann auf ein bestimmtes Verhältnis zwischen der zur Salzbildung befähigten Komponente und den übrigen, das Polyurethan aufbauenden Stoffe achten. So ist es zweckmäßig, die zur Salzbildung befähigte Komponente - berechnet als Dimethylolpropionsäure - in Mengen von 1 bis 30, vorzugsweise von 2 bis 20, und insbesondere von 10 bis 18 Gew.-%,bezogen auf Polyol, einzusetzen. Weiterhin hängt die Transparenz vom Neutralisationsgrad ab. Dabei kann der Fachmann durch wenige Vorversuche feststellen, ab welcher Menge an Ionenbildung befähigtem Modifizierungsmittel bzw. ab welcher Menge an Neutralisationsmittel ein ausreichender Grad an Transparenz erreicht ist. Im allgemeinen wird so wenig wie möglich von diesen Stoffen eingesetzt werden, da sie bei überhöhtem Einsatz die Wasserfestigkeit des Klebefilms stören können.

Unter den erfindungsgemäßen Polyurethan-Dispersionen werden zweiphasige Wasser/Polyurethan-Systeme verstanden, welche bevorzugt kolloidale Systeme und Sole mit Teilchendurchmessern bis etwa 200 nm umfassen. Diese Systeme sind vorzugsweise optisch opak bis transparent.

Der Feststoffgehalt der erfindungsgemäßen Klebstofflösungen kann in weiten Grenzen variiert werden. In der Praxis haben sich Feststoffgehalte zwischen 20 und 70 Gew.-%, insbesondere zwischen 30 und 50 Gew.-% bewährt.

Die den Poyurethandispersionen zugrundeliegende Polyolmischung und Isocyanatkomponente werden in einem Verhältnis OH zu NCO wie 1 : 0,5 bis 1 : 2,0 vorzugsweise 1 : 1,0 bis 1 : 1,7 und insbesondere 1 : 1,05 bis 1 : 1,6 eingesetzt.

### Beispiele

### Allgemeine Herstellvorschriften

Die Polyolkomponente wird bei 50 °C mit Aceton verdünnt oder darin gelöst bzw. dispergiert. Unter Rühren erfolgt dann die Zugabe der zur Ionenbildung befähigten Komponente. Bei Temperaturen zwischen 50 und 70°C wird dann Diisocyanat so lange zugegeben, bis der NCO-Gehalt nicht mehr sinkt. Besteht ein Teil der Isocyanatkomponente aus Dimerfettsäurediisocyanat, so wird dieses zuerst zugegeben und 2 Stunden bei 75 °C addiert. Bei 60 °C wird dann neutralisiert, z. B. mit N-Methylmorpholin oder Alkalihydroxiden. Nach einer Dauer von ca. 30 Minuten erfolgt dann die Zugabe von Wasser. Nach 30minütigem Dispergieren wird dann das Aceton abdestilliert, später unter höherem Vakuum bei Temperaturen von 55 bis 60 °C.

| | Beispiel I | Beispiel II |
|---|---|---|
| 1,6-Hexandiolpolycarbonat MG 2000 | 100 GT | 100 GT |
| Dimethylolpropionsäure | 15,58 GT | 15,58 GT |
| Aceton | 50 GT | 50 GT |
| Dibutylzinndilaurat | 0,42 GT | 0,42 GT |
| Dimerfettsäurediisocyanat - | 6,63 GT | 13,26 GT |
| Isophorondiisocyanat | 46,62 GT | 44,17 GT |
| Natriumhydroxid | 4,70 GT | 4,70 GT |
| Wasser deionisiert | 232 GT | 232 GT |
| Klebkraft (Zugscherfestigkeiten, Anlehnung an "DIN 53254") in N/mm² | | |

| | Beispiel I | Beispiel II |
|---|---|---|
| Buchensperrholz / Buchensperrholz | 6,3 | 6,3 |
| Buchenholz / Buchenholz | 8,5 | 8,5 |
| Buchensperrholz / PVC | 6,1 | 5,3 |
| Buchenholz / ABS | 5,0 | 4,4 |
| Buchenholz / PMMA | 4,8 | 4,2 |
| Buchenholz / Alu | 5,1 | 4,9 |
| Buchensperrholz / Buchensperrholz | 4,2 | 4,7 |
| Lagerung bei 30 °C / 3 Tage bei 80 °C | | |

| | Beispiel III | Vergleichsbeispiel 1 |
|---|---|---|
| 1,6 Hexandiolpolycarbonat | 100 GT | - |
| MG 2000 | | |
| Polyetherpolyol, gestartet auf | - | 100 GT |
| Glycerin, OHZ 34 | | |
| oleochemisches Polyol, entspr. | - | 82 GT |
| DE-PS 37 04 350, OHZ 160 | | |
| Dimethylolpropionsäure | 15,58 GT | 21,50 GT |
| Aceton | 50 GT | 50 GT |
| Isophorondiisocyanat | 49 GT | 98,05 GT |
| Natriumhydroxyd | 4,70 GT | 6,40 GT |
| Wasser, deionisiert | 233 GT | 450 GT |
| Klebkraft (Zugscherfestigkeit, Anlehnung an "DIN 53254") in N/mm² | | |

| | Beispiel III | Vergleichsbeispiel 1 |
|---|---|---|
| Holz/Holz | 7,7 | 4,5 |
| PVC/Holz | 2,0 | 1,4 |
| ABS/Holz | 2,0 | 1,4 |
| Alu/Holz | 7,9 | 4,9 |
| Stahl/Holz | 3,0 | n.b. |

| | Vergleichsbeispiel 2 | Vergleichsbeispiel 3 | Vergleichsbeispiel 4 |
|---|---|---|---|
| Polyesterdiol¹⁾ MG ca. 2000, OHZ 60 | 100 | 100 | 100 |
| Dimethylolpropionsäure | 15,9 | 17,3 | 16,4 |
| Aceton | 45 | 45 | 45 |
| Isophorondiisocyanat | 50,6 | 59,3 | 57,2 |
| Natriumhydroxyd | 4,8 | 5,2 | 4,9 |
| Wasser, deionisiert | 256 | 265 | 265 |

| | | | |
|---|---|---|---|
| 1) Reaktionsprodukt auf Basis Adipinsäure mit Dimethylenglykol und Hexandiol 1,2 | | | |
| Klebekraft (Zugscherfestigkeit, Anlehnung an "DIN" 53254") in N/mm² | | | |

| | Vergleichsbeispiel 2 | Vergleichsbeispiel 3 | Vergleichsbeispiel 4 |
|---|---|---|---|
| Holz/Holz | 6,3 (B) | 8,3 (B) | 7,5 (B) |
| PVC/Holz | 5,2 (B) | 3,5 (B) | 6 (B) |
| Alu/Holz | 5,6 (B) | 5,5 (B) | 8,5 (B) |
| (B) = Bruch, GT = Gewichtsteile, PVC = Polyvinylchlorid, ABS = Acrylnitril-Butadien-Styrol-Copolymer, PMMA = Polymethylmethacrylat, Alu = Aluminium, OHZ = OH-Zahl, MG = Molgewicht | | | |

### Lagertest

Erfindungsgemäß einzusetzende Polyurethan-Dispersionen gemäß Beispiel III und gemäß den Vergleichsbeispielen 1 bis 4 wurden einem Lagertest bei Temperaturen von 50 °C unterzogen. Es wurde die folgende Entwicklung der Viskosität beobachtet:

| | Ausgangsviskosität (mPa·s) | Viskosität nach 3 Monaten (mPa·s) |
|---|---|---|
| Beispiel III | 4 200 | 4 150 |
| Vergleichsbeispiel 1 | 4 000 | 3 700 |
| Vergleichsbeispiel 2 | 3 700 | 180 |
| Vergleichsbeispiel 3 | 3 500 | 120 |
| Vergleichsbeispiel 4 | 3 600 | 410 |

## Patentansprüche

1. Verwendung einer opak bis transparenten und zumindest weitgehend lösemittelfreien wäßrigen einkomponentigen Polyurethan-Dispersion auf Basis der Reaktionsprodukte
- einer Polyolmischung, die zu 30 bis 100 Gewichtsprozent aus Polycarbonatdiolen besteht.
- einer im Mittel zwei- oder mehrfunktionellen Isocyanatkomponente, die vorzugsweise Dimerfettsäureisocyanate enthält.
- einer in wäßriger Lösung zur Salzbildung befähigten funktionellen Komponente und
- gewünschtenfalls eines Kettenverlängerungsmittels
als Haushaltsalleskleber.

2. Ausführungsform nach Anspruch 1, dadurch gekennzeichnet, daß die den Polyurethan-Dispersionen zugrundeliegenden Polyolmischungen zu 0 bis 70 Gew.-% aus einem Polyetherpolyol, Polyacetalpolyol und/oder Polyesterpolyol mit im Mittel 2 bis höchstens 4 OH-Gruppen bestehen.

3. Ausführungsform nach einem der vorstehenden Ansprüche, dadurch gekennzeichnet, daß die den Polyurethan-Dispersionen zugrundeliegenden Polyolmischungen zu 70 bis 100 Gew.-% aus Polycarbonatdiolen bestehen.

4. Ausführungsform nach einem der vorstehenden Ansprüche, dadurch gekennzeichnet, daß die den Polyurethan-Dispersionen zugrundeliegenden Polycarbonatdiole einen aliphatischen Aufbau aufweisen und sich von mehrfunktionellen Alkoholen, insbesondere von Diolen mit 4 bis 10 C-Atomen mit vorzugsweise endständigen Hydroxylgruppen, ableiten.

5. Ausführungsform nach einem der vorstehenden Ansprüche, dadurch gekennzeichnet, daß die den Polyurethan-Dispersionen zugrundeliegende Isocyanatkomponente aliphatischen Isocyanate, vorzugsweise verzweigte und/oder cyclische aliphatische Isocyanate, insbesondere Isophorondiisocyanat und/oder Dimerfettsäurediisocyanat, enthält.

6. Ausführungsform nach einem der vorstehenden Ansprüche, dadurch gekennzeichnet, daß die den Polyurethan-Dispersionen zugrundeliegende Polyolmischung und Isocyanatkomponente im Verhältnis OH : NCO wie 1 : 0,5 bis 1 : 2,0 vorzugsweise 1 : 1,0 bis 1 : 1,7 und insbesondere 1 : 1,05 bis 1 : 1,6 eingesetzt werden.

7. Ausführungsform nach einem der vorstehenden Ansprüche, dadurch gekennzeichnet, daß die den Polyurethan-Dispersionen zugrundeliegenden Polyurethane als in wäßriger Lösung zur Salzbildung befähigte Komponenten Carbonsäuren, Sulfonsäuren oder Ammoniumverbindungen mit 1 bis 2 Hydroxylgruppen oder gegenüber Isocyanaten reaktiven Aminogruppen, insbesondere Dimethylolpropionsäure, einkondensiert enthalten.

8. Ausführungsform nach einem der vorstehenden Ansprüche, dadurch gekennzeichnet, daß die den Polyurethan-Dispersionen zugrundeliegenden Polyurethane einkondensierte Carbonsäuren oder Sulfonsäuren enthalten, die als Alkalisalz, Ammoniumsalz oder als Salz primärer, sekundärer oder tertiärer Amine vorliegen.

9. Ausführungsform nach einem der vorstehenden Ansprüche, dadurch gekennzeichnet, daß die den Polyurethan-Dispersionen zugrundeliegenden Polyurethane als Kettenverlängerungsmittel gegenüber Isocyanatgruppen reaktive Diamine und/oder Dihydroxyverbindungen enthalten.

10. Ausführungsform nach einem der vorstehenden Ansprüche, dadurch gekennzeichnet, daß bei den verwendeten Polyurethan-Dispersionen die für das klare Erscheinungsbild verantwortliche Teilchengröße über die Menge der in wäßriger Lösung zur Salzbildung befähigten Gruppen gesteuert wird.

11. Ausführungsform nach einem der vorstehenden Ansprüche, dadurch gekennzeichnet, daß die Menge der in wäßriger Lösung zur Salzbildung befähigten Gruppen - berechnet als Dimethylolpropionsäure - 1 bis 30 vorzugsweise 2 bis 20 und insbesondere 10 bis 18 Gew.-% bezogen auf Polyol beträgt.

12. Ausführungsform nach einem der vorstehenden Ansprüche, dadurch gekennzeichnet, daß bei den verwendeten Polyurethan-Dispersionen die für das klare Erscheinungsbild verantwortlichen Teilchengröße über die Menge des zugesetzten Neutralisierungsmittels für die zur Salzbildung befähigten funktionellen Gruppen eingestellt wird.

## Claims

1. The use of an opaque to transparent and at least largely solventless, aqueous, one-component polyurethane dispersion based on the reaction products of
- a polyol mixture of which 30 to 100% by weight consists of polycarbonate diols,
- an on average difunctional or more than difunctional isocyanate component preferably containing dimer fatty acid isocyanates,
- a functional component capable of salt formation in aqueous solution and
- optionally a chain-extending agent
as a universal household adhesive.

2. The use claimed in claim 1, characterized in that 0 to 70% by weight of the polyol mixtures on which the polyurethane dispersions are based consist of a polyether polyol, polyacetal polyol and/or polyester polyol containing on average 2 to at most 4 OH groups.

3. The use claimed in any of the preceding claims, characterized in that 70 to 100% by weight of the polyol mixtures on which the polyurethane dispersions are based consist of polycarbonate diols.

4. The use claimed in any of the preceding claims, characterized in that the polycarbonate diols on which the polyurethane dispersions are based have an aliphatic structure and are derived from polyhydric alcohols, more particularly C₄₋₁₀ diols preferably terminated by hydroxyl groups.

5. The use claimed in any of the preceding claims, characterized in that the isocyanate component on which the polyurethane dispersions are based contains aliphatic isocyanates, preferably branched and/or cyclic aliphatic isocyanates, more particularly isophorone diisocyanate and/or dimer fatty acid diisocyanate.

6. The use claimed in any of the preceding claims, characterized in that the polyol mixture and isocyanate component on which the polyurethane dispersions are based are used in an OH;NCO ratio of 1:0.5 to 1:2.0, preferably 1:1.0 to 1:1.7 and, more preferably, 1:1.05 to 1:1.6.

7. The use claimed in any of the preceding claims, characterized in that the polyurethanes on which the polyurethane dispersions are based contain carboxylic acids, sulfonic acid or ammonium compounds containing 1 to 2 hydroxyl groups or isocyanate-reactive amino groups in cocondensed form, more particularly dimethylol propionic acid, as components capable of salt formation in aqueous solution.

8. The use claimed in any of the preceding claims, characterized in that the polyurethanes on which the polyurethane dispersions are based contain co-condensed carboxylic acids or sulfonic acids present in the form of an alkali salt, ammonium salt or salt of primary, secondary or tertiary amines.

9. The use claimed in any of the preceding claims, characterized in that the polyurethanes on which the polyurethane dispersions are based contain isocyanate-reactive diamines and/or dihydroxy compounds as chain-extending agents.

10. The use claimed in any of the preceding claims, characterized in that the particle size responsible for the clear appearance of the polyurethane dispersions used is controlled through the quantity of groups capable of salt formation in aqueous solution.

11. The use claimed in any of the preceding claims, characterized in that the quantity of the groups capable of salt formation in aqueous solution, expressed as dimethylol propionic acid, is from 1 to 30% by weight, preferably from 2 to 20% by weight and more preferably from 10 to 18% by weight, based on polyol.

12. The use claimed in any of the preceding claims, characterized in that the particle size responsible for the clear appearance of the polyurethane dispersions used is adjusted through the quantity of neutralizing agent added for the functional groups capable of salt formation.

## Revendications

1. Utilisation d'une dispersion de polyuréthane opaque à transparente, au moins dans une large mesure exempte de solvant, aqueuse, à un composant, sur la base des réactifs suivants:
- un mélange de polyols qui se compose de polycarbonatediols pour 30 à 100 % en poids;
- un composant d'isocyanate en moyenne bifonctionnel ou polyfonctionnel qui renferme de préférence de l'isocyanate d'acide gras dimérique;
- un composant fonctionnel salifiable en solution aqueuse, et
- éventuellement un agent de prolongement de la chaîne
comme colle universelle ordinaire.

2. Variante de réalisation selon la revendication 1, caractérisée en ce que les mélanges de polyols à la base des dispersions de polyuréthane se composent, pour 0 à 70 % en poids, d'un polyétherpolyol, d'un polyacétalpolyol et/ou d'un polyesterpolyol avec en moyenne deux à maximum quatre groupes OH.

3. Variante de réalisation selon l'une quelconque des revendications précédentes, caractérisée en ce que les mélanges de polyols à la base des dispersions de polyuréthane se composent, pour 70 à 100 % en poids, de polycarbonatediols.

4. Variante de réalisation selon l'une quelconque des revendications précédentes, caractérisée en ce que les polycarbonatediols à la base des dispersions de polyuréthane présentent une structure aliphatique et découlent d'alcools polyfonctionnels, en particulier de diols présentant 4 à 10 atomes C et des groupes hydroxyle de préférence en fin de chaîne.

5. Variante de réalisation selon l'une quelconque des revendications précédentes, caractérisée en ce que les composants isocyanate à la base des dispersions de polyuréthane renferment des isocyanates aliphatiques, de préférence des isocyanates aliphatiques ramifiés et/ou cycliques, en particulier du diisocyanate d'isophorone et/ou du diisocyanate d'acide gras dimérique.

6. Variante de réalisation selon l'une quelconque des revendications précédentes, caractérisée en ce que le mélange de polyols à la base des dispersions de polyuréthane et les composants d'isocyanate sont utilisés dans un rapport OH:NCO, de l'ordre de 1:0,5 à 1:2,0, de préférence de 1:1,0 à 1:1,7 et en particulier de 1:1,05 à 1:1,6.

7. Variante de réalisation selon l'une quelconque des revendications précédentes, caractérisée en ce que le polyuréthane à la base des dispersions de polyuréthane renferme sous une forme condensée, à titre de composants salifiables en solution aqueuse, des acides carboxyliques, des acides sulfoniques ou des composés d'ammonium avec 1 à 2 groupes hydroxyle ou des groupes amino réagissant aux isocyanates, en particulier de l'acide diméthylolpropionique.

8. Variante de réalisation selon l'une quelconque des revendications précédentes, caractérisée en ce que les polyuréthanes à la base des dispersions de polyuréthane renferment sous forme condensée des acides carboxyliques ou des acides sulfoniques qui se présentent sous forme de sel d'ammonium, de sel de métal alcalin ou de sel d'amines primaires, secondaires ou tertiaires.

9. Variante de réalisation selon l'une quelconque des revendications précédentes, caractérisée en ce que les polyuréthanes à la base des dispersions de polyuréthane renferment, comme agent de prolongement de la chaîne, des diamines et/ou des composés dihydroxylés réagissant aux groupes isocyanate.

10. Variante de réalisation selon l'une quelconque des revendications précédentes, caractérisée en ce que dans le cas des dispersions de polyuréthane utilisées, la taille de particule à l'origine de l'apparence claire est guidée par la quantité des groupes salifiables en solution aqueuse.

11. Variante de réalisation selon l'une quelconque des revendications précédentes, caractérisée en ce que la quantité des groupes salifiables en solution aqueuse - évalués comme acide diméthylolpropionique - est de l'ordre de 1 à 30, de préférence de 2 à 20 et en particulier de 10 à 18 % en poids rapporté au polyol.

12. Variante de réalisation selon l'une quelconque des revendications précédentes, caractérisée en ce que dans le cas des dispersions de polyuréthane utilisées, la taille de particule à l'origine de l'apparence claire est déterminée par la quantité de l'agent de neutralisation ajouté pour les groupes fonctionnels salifiables en solution aqueuse.
